# EUROPEAN PATENT APPLICATION

(11) **EP 1 221 704 A2**
(43) Date of publication of application: **10.07.2002**
(21) Application number: 01310912.9
(22) Date of filing: 27.12.2001
(51) Int. Cl.: H01G 9/155

(54) **Manufacturing method of capacitor**

(30) Priority: 27.12.2000 JP 2000397320
(71) Applicant: NGK INSULATORS, LTD., Nagoya-City, Aichi Prefecture 467-8530 (JP)
(72) Inventor: Ohno, Masashi, c/o NGK Insulators, Ltd., Nagoya City, Aichi-pref., 467-8530 (JP); Nakagawa, Torshihiko, c/o NGK Insulators, Ltd., Nagoya City, Aichi-pref., 467-8530 (JP); Katsukawa, Hiroyuki, c/o NGK Insulators, Ltd., Nagoya City, Aichi-pref., 467-8530 (JP)
(74) Representative: Paget, Hugh Charles Edward

(57) **Abstract**

There is provided a manufacturing method of a capacitor including: providing the capacitor having positive and negative polarizable electrodes which generates an electric double layer; a separator with which the polarizable electrodes are electrically insulated therebetween; and collecting electrodes that are made of metal and lead out charges from the polarizable electrodes, and joining a bundle of lead portions of the collecting electrodes to an electrode terminal by ultrasonic welding. A gross area of protruding portions in an ultrasonic-welding surface is made to be within a range of 5 to 50% of a contact area of the ultrasonic-welding surface and lead sections of collecting electrodes. The manufacturing method can perform junction of electrode terminals without increasing junction resistance only by ultrasonic welding even if the bundle of lead portions of collecting electrodes is thick, or the number of sheets of collecting electrodes is large.

## Description

### Background of the Invention and Related Art Statement

The present invention relates to a manufacturing method of a capacitor.

Now, the application development of capacitors has been actively performed in various kinds of fields because of characteristics of being chargeable and dischargeable in short time.

In particular, environmental problems and resources problems request the drastic reduction of an amount of fossil fuels used by automobiles. As one of the measures of this reduction, so-called hybrid cars that can reduce the amount of the fossil fuels used by the combined use of fossil fuels and electricity have gotten a lot of attention. In this field, much power densification of high power density type capacitors are requested.

On the other hand, the use of capacitors as so-called backup power supplies of personal computers or various types of electrical equipment has also increased. Although the high energy density type capacitors are used in this field, much energy densification is requested.

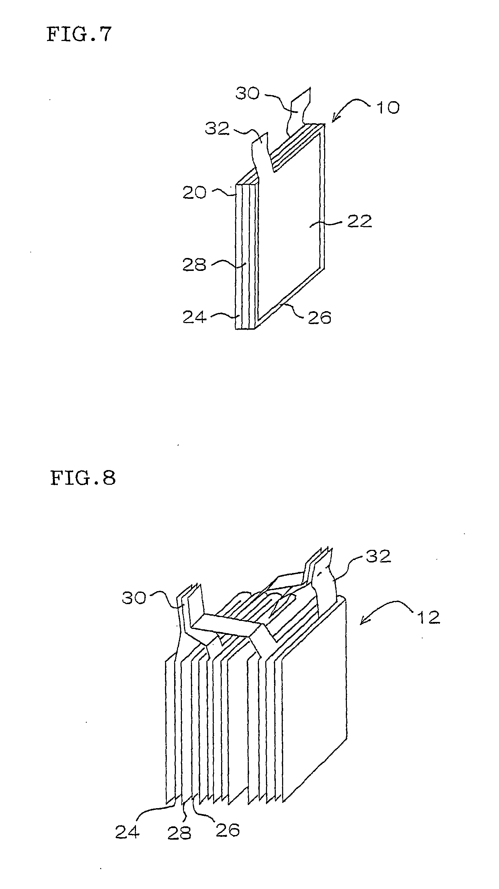

For this reason, as a capacitor, it is common to use, for example, a single capacitor cell 12 which has a stacked structure, which is a basic structure of a capacitor as shown in Fig. 7 and is formed by joining lead portions 30 and 32 formed in collecting electrodes 20 and 22 of a single electrode cell 10 electrically in parallel, respectively, as shown in Fig. 8.

In addition, as shown in Figure 7, the single electrode cell 10 has the structure where a polarizable electrode 24 in a positive polarity and a polarizable electrode 26 in a negative polarity are formed on the collecting electrodes 20 and 22 which are made of metal (for example, aluminum), respectively, and polarizable electrodes 24 and 26 are isolated from each other by a separator 28 (a part for performing separation so that only ions in a liquid electrolyte may be passed and the polarizable electrodes 24 and 26 in positive and negative polarities may not contact). In addition, a liquid electrolyte which consists of a solvent and an electrolyte is impregnated to the polarizable electrodes 24 and 26 and separator 28.

In addition, when the capacitor shown above is actually used, the capacitor is packed in severe packaging suitability (sealing performance, barrier property, antiwear quality, expansion-proof property, etc.) except the electrode terminal in order to prevent leakage, degradation, etc. of the liquid electrolyte.

Here, for connecting a bundle (for example, one to forty sheets of several tens to hundreds µm thickness of aluminum foils are bundled) of the lead portions 4 of the collecting electrodes, and the electrode terminal in the capacitor shown above, so as to stably maintain electrical connection over a long period of time, besides ultrasonic welding, a caulking method, a screw cramping method, a pressure joint method, a TIG welding method, etc. have been examined.

In addition, when ultrasonic welding is used, as shown in Fig. 1, by giving ultrasonic vibration from an ultrasonic-welding surface 52 of a welding head 50 by sandwiching the lead portions 4 of the collecting electrodes 2 and the electrode terminal 40 by the welding head 50 and an anvil 60, applying pressure, and performing welding by using frictional heat by vibration, the bundle of lead portions 4 of the collecting electrodes 2 and the electrode terminal 40 are joined as shown in Figs. 4 and 5.

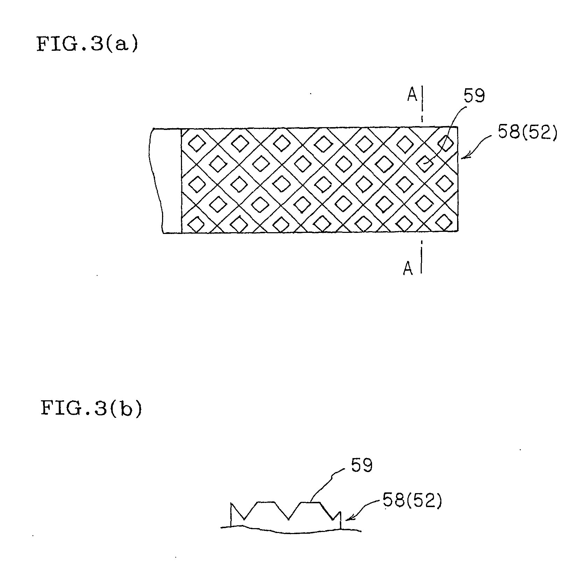

At this time, in ultrasonic welding, usually, although a pattern on an ultrasonic-welding surface 58 shown in Fig. 3 consisting of two or more squares 59, that is, a so-called diamond cut pattern is generally used, one or more cracks arise in many cases into one or more corner parts of the squares 59 which are a welded surface pattern.

In addition, in a capacitor with high energy density, since several tens to hundreds of single electrode cells 10 in a single capacitor cell are required, the thickness of the bundle of lead portions 4 may exceed 0.6 mm.

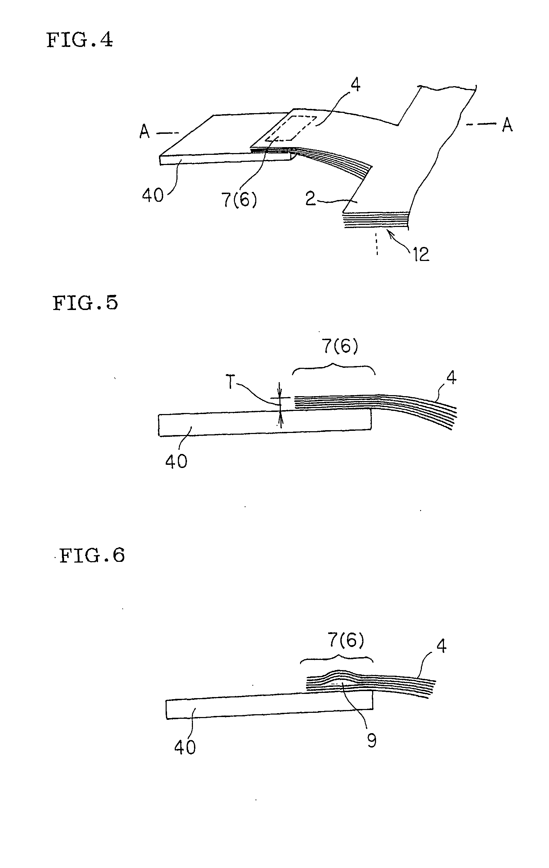

For this reason, when junction is performed only by conventional ultrasonic welding (welding using the ultrasonic-welding surface 58 shown in Fig. 3), as shown in Fig. 6, since sufficient ultrasonic vibration cannot be given to surfaces of the bundle of lead portions 4 to be joined to the electrode terminal 40, a part of the bundle of lead portions 4 remains as a peeling portion 9 without being welded. Hence, there is a problem that the durability of a joint 6 in vibration, cold-heat cycles, and charge and discharge cycles over a long period of time drops.

In particular, when a lead portion is made of aluminum to which etching processing is performed, it is easy to peel under the influence of an etching layer on a surface, and hence, ultrasonic welding could not be completed.

Furthermore, when any one of the caulking method, screw-cramping method, and pressure joint method is used, there is a problem that a junction resistance between lead portions and an electrode terminal increases. If it is tried to obtain a sufficiently low junction resistance when the spot welding method or TIG welding method is used, there is a problem that damage in a lead portion becomes large, and hence, the lead portion is cut.

Thus, at the time of junction of a lead portion and an electrode terminal, when the thickness of the bundle of the lead portions exceeds 0.6 mm, the number of sheets of collecting electrodes is 20 or more sheets, or the lead portions are made of aluminum to which etching processing is performed, the trouble arises notably.

### Summary of the Invention

The present invention seeks to solve problems of conventional technology and its object is to provide a manufacturing method of a capacitor that can surely perform junction with an electrode terminal only by ultrasonic welding without increasing any junction resistance even if a bundle of lead portions of collecting electrodes becomes thick, or the number of sheets of collecting electrodes is many, and also, can contribute to improvement in the durability in the vibration, a cold-heat cycle, and a charge and discharge cycle over a long period of time.

That is, according to the present invention, there is provided a manufacturing method of a capacitor, comprising: providing the capacitor comprising positive and negative polarizable electrodes which generate an electric double layer; a separator with which the polarizable electrodes are electrically insulated therebetween; and collecting electrodes that are made of metal and lead out charges from the polarizable electrodes, and joining a bundle of lead portions of the collecting electrodes to an electrode terminal by ultrasonic welding, wherein the total area of protruding portion in an ultrasonic-welding surface is within a range of 5 to 50% of a contact area of the ultrasonic-welding surface and the lead sections of the collecting.

At this time, it is preferable that the area of the protruding portions is 0.005 to 0.050 times as large as the area of the ultrasonic-welding surface.

In addition, it is preferable that the protruding portions are uniformly arranged in predetermined intervals on the ultrasonic-welding surface.

Furthermore, it is preferable that an end of the protruding portion is processed in the shape of a cone having a gradual taper.

In addition, in the present invention, even if the thickness of the bundle of lead portions exceeds 0.6 mm, or the number of collecting electrodes exceeds 20 sheets, the bundle of lead portions is certainly connectable with an electrode terminal only by ultrasonic welding.

Moreover, it is preferable that the thickness per sheet of the lead portions is 10 to 100 µm, and in consideration of the amount of current flowing to a lead portion, weight per cell, and dimensions, it is still more preferable that the thickness per sheet of a lead portion is 20 to 50 µm.

Furthermore, in the present invention, it is preferable that the junction resistance in the joint of collecting electrodes and an electrode terminal is at least 30 µΩ or less, and it is preferable that a collecting electrode and a lead portion are made of aluminum to which etching processing is performed.

### Brief Description of the Drawings

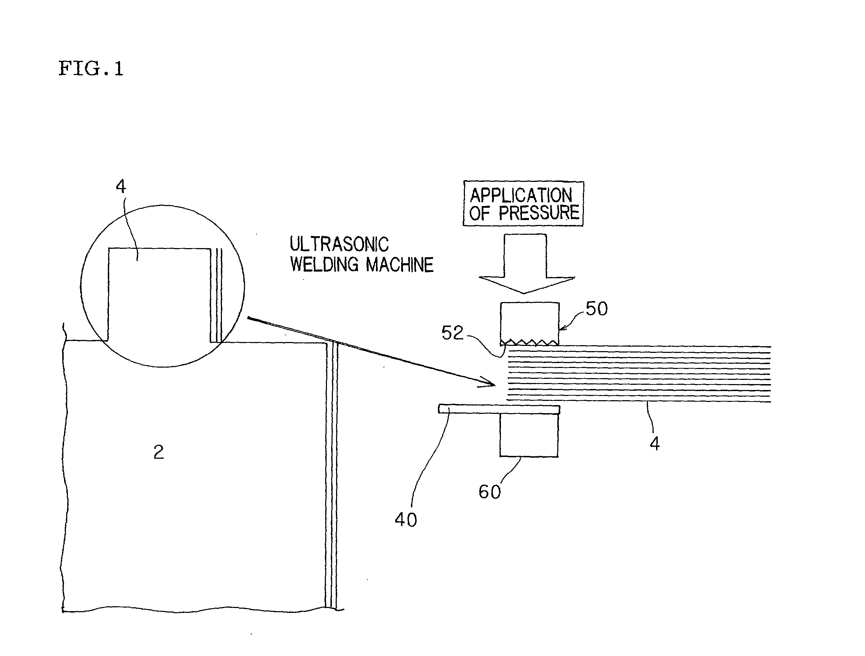

Fig. 1 is an explanatory diagram showing an example of a connection method of lead portions of collecting electrodes and an electrode terminal according to the present invention.

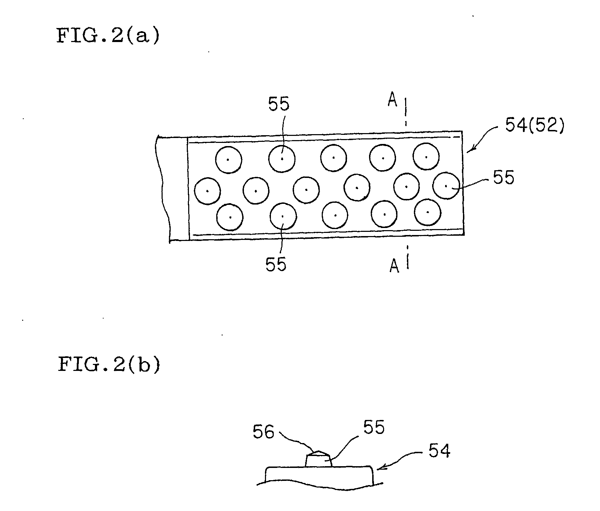

Figs. 2(a) and 2(b) show an example of a geometry of an ultrasonic-welding surface in a welding head according to the present invention, Fig. 2(a) is a front view, and Fig. 2(b) is a sectional view taken on line A-A in Fig. 2(a).

Figs. 3(a) and 3(b) show an example of a geometry of an ultrasonic-welding surface in a conventional welding head, Fig. 3(a) is a front view, and Fig. 3(b) is a sectional view taken on a line A-A in Fig. 3(a).

Fig. 4 is a schematic perspective view showing a junction state of lead portions of collecting electrodes and an electrode terminal in the present invention.

Fig. 5 is a sectional view taken on a line A-A in Fig. 4.

Fig. 6 is a schematic sectional view showing a junction state of lead portions of collecting electrodes and an electrode terminal in conventional ultrasonic welding.

Fig. 7 is a perspective view showing an example of a structure of a single electrode cell.

Fig. 8 is a perspective view showing an example of a structure of a single capacitor cell.

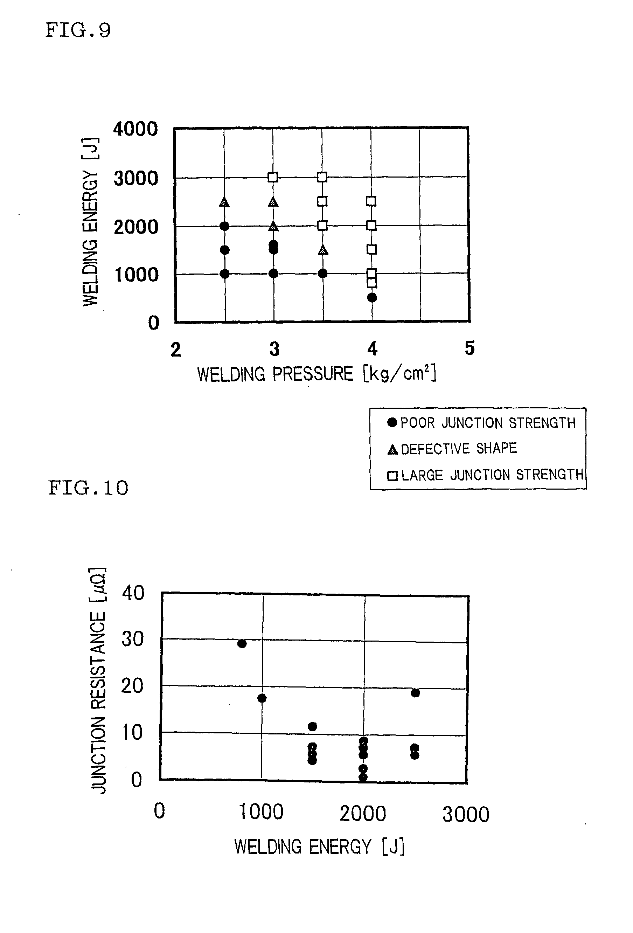

Fig. 9 is a graph showing a junction state of lead portions of collecting electrodes and an electrode terminal by ultrasonic welding (welding pressure: 2.5 to 4 kg/cm², and welding energy: 500 to 3000 J).

Fig. 10 is a graph showing a relation between the welding energy [J] and the junction resistance [µΩ] between lead portions of collecting electrodes and an electrode terminal at a welding pressure of 4 kg/cm².

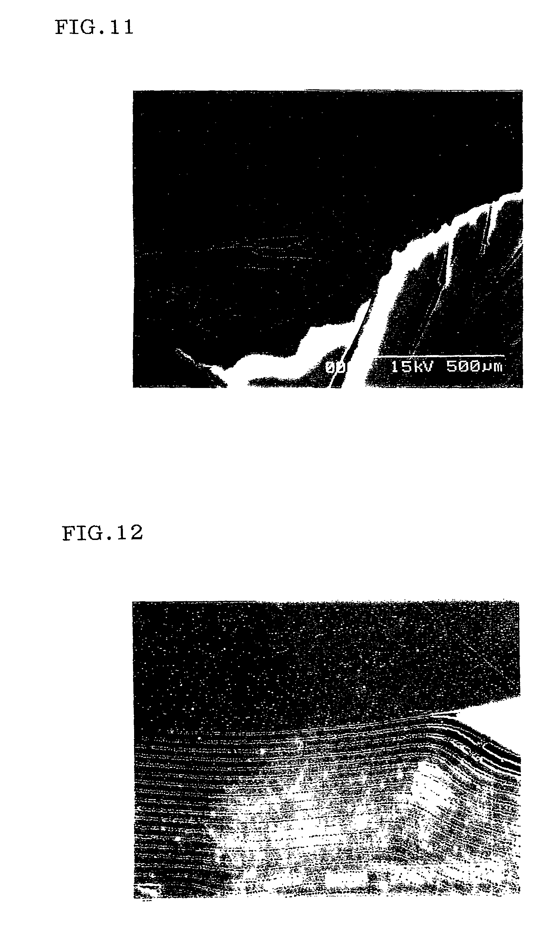

Fig. 11 is a SEM photography showing a junction interface between lead portions of collecting electrodes and an electrode terminal by ultrasonic welding (welding pressure: 4 kg/cm², welding energy: 2000 J).

Fig. 12 is a SEM photography showing a junction interface between lead portions of collecting electrodes and an electrode terminal by ultrasonic welding (welding pressure: 4 kg/cm², welding energy: 800 J).

### Detailed Description of Preferred Embodiment

A manufacturing method of a capacitor according to the present invention aims to make a gross area of protruding portions in an ultrasonic-welding surface be within a range of 5 to 50% of a contact area of the ultrasonic-welding surface and a bundle of lead sections of collecting electrodes at the time of connecting the bundle of lead portions of collecting electrodes to the electrode terminal by ultrasonic welding.

Owing to this, while it is possible to surely perform junction with the electrode terminal without increasing any junction resistance even if the bundle of lead portions of collecting electrodes becomes thick, it is possible to contribute to the improvement in the durability in vibration, cold-heat cycles, and charge and discharge cycles over a long period of time.

Hereinafter, based on drawings, the present invention will be described further in detail.

Figs. 2(a) and 2(b) show an example of the geometry of an ultrasonic-welding surface in a welding head of the present invention, Fig. 2(a) is a front view, and Fig. 2(b) is a sectional view taken on a line A-A in Fig. 2(a).

Here, a manufacturing method of a capacitor according to the present invention is mainly characterized in making a gross area of protruding portions 55 in an ultrasonic-welding surface 54 be within a range of 5 to 50% of a contact area of the ultrasonic-welding surface 54 and a bundle of lead sections 4 of collecting electrodes 2, as shown in Fig. 2.

This is because, when the gross area of the protruding portions 55 in the ultrasonic-welding surface 54 exceeds 50% of the contact area of the ultrasonic-welding surface 54 and the lead portions 4 of collecting electrodes 2, the welding head 50 adheres to the lead portions 4 of collecting electrodes 2, and hence, the lead portions 4 are cut at the time of separating the lead portions 4 from the welding head 50.

On the other hand, when the gross area of the protruding portions 55 in the ultrasonic-welding surface 54 is less than 5% of the contact area of the ultrasonic-welding surface 54 and the lead portions 4 of collecting electrodes 2, junction strength and junction resistance are insufficient.

At this time, it is preferable in the present invention as shown in Fig. 2(a) that the area of the protruding portions 55 is 0.005 to 0.050 times as large as the area of the ultrasonic-welding surface 54, and that the protruding portions 55 are uniformly arranged in predetermined intervals in the ultrasonic-welding surface 54.

This is because it is possible not only to avoid a damage of the lead portions due to a crack by suppressing the adhesion of the lead portions and ultrasonic-welding surface at the time of junction, but also to make the bonding strength and junction resistance of the lead portions and electrode terminal good.

In addition, it is preferable that each protruding portion 55 is frustoconical as shown in Fig. 2(b) or is cylindrical, and that its end 56 has a shape of a shallow cone.

Owing to this, since ultrasonic energy can be converged on the protruding portions 55, it is possible to surely join the lead portions and electrode terminal efficiently.

In addition, it is preferable in the present invention that a bond resistance in a joint of the collecting electrodes and electrode terminal is at least 30 µΩ or less.

This is because an internal resistance value of a capacitor becomes large if the resistance of the joint becomes high.

The manufacturing method of the capacitor of the present invention can prevent the peeling of lead portions only by ultrasonic welding from the above description. Hence, as shown in Fig. 5, even if a thickness T of the bundle of lead portions 4 exceeds 0.6 mm, or even if the number of sheets of the collecting electrodes exceeds 20 sheets, it is possible to sharply increase the durability of the joint 6 in vibration, cold-heat cycles, and charge and discharge cycles for a long period of time.

In addition, it is preferable that the thickness per sheet of the lead portions used in the present invention is 10 to 100 µm. It is still more preferable that the thickness is 20 to 50 µm in consideration of an amount of current flowing to the lead portion, the weight per cell, and dimensions and geometry.

Furthermore, it is preferable that the collecting electrodes and lead portions that are used in the present invention are made of aluminum to which etching processing is performed.

Usually, on the surface of an aluminum foil, a natural oxidation film is generated easily and the thickness of the oxide film is not uniform. The reason why the aluminum foil to which etching processing is performed in order to control the thickness of an oxide film uniformly is used is because the electric junction of the collecting electrodes and the polarizable electrode that are made of aluminum foils is stabilized. The reason why the lead portions to which etching processing is performed is used is because it is easy to perform formation processing of the lead portions and the collecting electrodes in one piece in a usual manufacturing method. In addition, the etching processing has the effectiveness of enhancing the stability of the aluminum foil in a capacitor cell.

### [Embodiments]

Hereafter, although the present invention will be described further in detail on the basis of embodiments, the present invention is not restricted to these embodiments.

### (Embodiments)

The welding head 50 which had the ultrasonic-welding surface 54 shown in Fig. 2 was set in an ultrasonic welder (model 19000 and POWER SUPPLY 900M made by Emerson Japan, Ltd.) shown in Fig. 1.

In addition, dimensions of the ultrasonic-welding surface 54 are a diameter of 4 mm and a height of 1 mm of the protruding portion 55, and the gross area of the protruding portions 55 was 30% of the contact area of the ultrasonic-welding surface 54 and lead portions 4 of the collecting electrode 2.

Next, twenty eight sheets of lead portions (width: 20 mm, length: 30 mm) of the 50-µm thick collecting electrodes consisting of aluminum foils to which the etching processing was performed are stacked, and a bundle of lead portions was produced respectively.

The bundle of the above-described lead portions was set in the ultrasonic welder shown in Fig. 1 by overlapping ends of the bundle of the lead portions of the electrode terminal made of aluminum (width: 20 mm, thickness: 2 mm) by 10 mm. Then, the bundle of the lead portions was welded under conditions of welding pressure: 2.5 to 4 kg/cm², and welding energy: 500 to 3000 J, respectively.

At this time, each junction state of the lead portions of the collecting electrodes and electrode terminal was observed. The result is shown in Fig. 9.

In addition, a relation between the welding energy [J] and the junction resistance [µΩ] between the lead portions of the collecting electrodes and the electrode terminal at the welding pressure of 4 kg/cm² is shown in Fig. 10.

Furthermore, when welding pressure was 4 kg/cm² and welding energy was 800 J (refer to Fig. 12) and 2000 J (refer to Fig. 11), a junction interface between the lead portions of collecting electrodes and electrode terminal was observed with a scanning electron micro scope (SEM).

### (Discussion)

From the result of Fig. 9, it was confirmed that the optimal welding conditions for the junction of the welding head and lead portions of collecting electrodes were a welding pressure of 3 to 4 kg/cm² (preferably, 4 kg/cm²) and a welding energy of 1000 to 2500 J.

In addition, from the result of Figs. 10 to 12, it was confirmed that the optimal welding energy for the junction of the welding head and the lead portions of collecting electrodes at a welding pressure of 4 kg/cm² was 1500 to 2000 J (preferably, 2000 J).

As described above, the manufacturing method of the capacitor according to the present invention not only can certainly perform junction with electrode terminals without increasing any junction resistance only by ultrasonic welding even if the bundle of lead portions of collecting electrodes is thick, or the number of sheets of collecting electrodes is large, but also can contribute to the improvement in the durability in vibration, cold-heat cycles, and charge and discharge cycles over a long period of time.

## Claims

1. A manufacturing method of a capacitor, comprising:
providing the capacitor comprising positive and negative polarizable electrodes which generate an electric double layer; a separator with which the polarizable electrodes are electrically insulated therebetween; and collecting electrodes that are made of metal and lead out charges from the polarizable electrodes, and
joining a bundle of lead portions of the collecting electrodes to an electrode terminal by ultrasonic welding,
wherein the gross area of protruding portions in an ultrasonic-welding surface is within a range of 5 to 50% of a contact area of the ultrasonic-welding surface and the lead sections of the collecting electrodes.

2. The manufacturing method of a capacitor according to claim 1, wherein said area of protruding portions is 0.005 to 0.050 times as large as an area of the ultrasonic-welding surface.

3. The manufacturing method of a capacitor according to any one of claims 1 and 2, wherein the protruding portions are uniformly arranged in predetermined intervals in the ultrasonic-welding surface.

4. The manufacturing method of a capacitor according to any one of claims 1 to 3, wherein an end of the protruding portion is processed in a shape of a cone having a gradual taper.

5. The manufacturing method of a capacitor according to any one of claims 1 to 4, wherein thickness of the bundle of lead portions exceeds 0.6 mm.

6. The manufacturing method of a capacitor according to any one of claims 1 to 5, wherein the number of sheets of the bundle of lead portions exceeds 20 sheets.

7. The manufacturing method of a capacitor according to any one of claims 1 to 6, wherein thickness per sheet of the lead portions is 10 to 100 µm.

8. The manufacturing method of a capacitor according to any one of claims 1 to 7, wherein bond resistance in a connection of the collecting electrodes and the electrode terminal is at least 30 µΩ or less.

9. The manufacturing method of a capacitor according to any one of claims 1 to 8, wherein the collecting electrode and the lead portion are made of aluminum to which etching processing is given.
